Europäisches Patentamt

European Patent Office

Office européen des brevets

(11) Veröffentlichungsnummer: **0 510 257 A1**

# EUROPÄISCHE PATENTANMELDUNG

(21) Anmeldenummer: **91120679.5**

(22) Anmeldetag: **02.12.91**

(51) Int. Cl.5: **C09K 3/10**, F16J 15/12

(30) Priorität: **23.03.91 DE 4109681**

(43) Veröffentlichungstag der Anmeldung:
**28.10.92 Patentblatt 92/44**

(84) Benannte Vertragsstaaten:
**DE ES FR GB IT SE**

(71) Anmelder: **GOETZE AG**
**Bürgermeister-Schmidt-Strasse 17**
**W-5093 Burscheid 1(DE)**

(72) Erfinder: **Spillner, Bernd, Dipl.-Ing.**
**Domblick 66**
**W-5090 Leverkusen 3(DE)**
Erfinder: **Zerfass, Hans-Rainer, Dr.**
**Idsteiner Strasse 42**
**W-6204 Taunusstein-Neuhof(DE)**

(54) **Imprägnierte Flachdichtung sowie das Verfahren zur Herstellung der Dichtung.**

(57) Bei einer Flachdichtung, wie insbesondere einer Zylinderkopfdichtung für Verbrennungskraftmaschinen, besteht das Faservlies aus 2 - 20 Gewichtsprozent organischer Synthesefaser, 10 - 70 Gewichtsprozent eines ersten anorganischen Füllstoffs mit einer Korngröße von maximal 0,01 mm und einer spezifischen Oberfläche von maximal 30 $m^2/g$ sowie einem zweiten anorganischen Füllstoff in nadelförmiger oder globularer Form mit einer Korngröße von maximal 0,01 mm und einer spezifischen Oberfläche von 50 - 350 $m^2/g$ sowie 0,5 - 1 Gewichtsprozent Zinkoxid und 3 - 10 Gewichtsprozent Latexbindemittel und gegebenenfalls 2 - 4 Gewichtsprozent Zinkstearat und bis zu 10 Gewichtsprozent Graphit. Das erfindungsgemäße Material kann gegebenenfalls nach Vereinigung mit dem Trägerblech als Bandmaterial kontinuierlich durch ein Imprägniermittelbad und dann durch einen Vernetzungsofen geführt werden, und das imprägnierte Material ist problemlos zu Dichtungen stanzbar, die trotz des Imprägniermittelgehaltes eine hohe Druckbelastbarkeit besitzen, so daß sie mit hohen Dichtpressungsdrucken und dadurch hoher Abdichtwirkung eingesetzt werden können.

EP 0 510 257 A1

Die Erfindung betrifft eine imprägnierte Flachdichtung, wie insbesondere eine Zylinderkopfdichtung für Verbrennungskraftmaschinen, aus gegebenenfalls metallisch verstärkten Faservliesen sowie das Verfahren zur Herstellung der Flachdichtung.

Zylinderkopfdichtungen für Verbrennungskraftmaschinen bestehen bevorzugt aus plattenförmigem asbesthaltigem oder asbestfreiem Faservliesmaterial mit gegebenenfalls zur Verstärkung einliegenden Metallplatten. Das Faservliesmaterial ist bevorzugt vor allem zur Verbesserung seiner Festigkeit und seines Abdichtverhaltens mit vernetzungsfähigen flüssigen Polymeren imprägniert, die dann im Faservlies bevorzugt thermisch unter Verwendung von Vernetzungsmitteln oder Vernetzungskatalysatoren vernetzt sind. Aus der Dichtungsplatte sind die Durchgangsöffnungen für den Brennraum, die Kühlflüssigkeiten, das Kühlmittel und die Befestigungsschrauben ausgestanzt und zum Schutz sind vor allem die Schnittflächen der thermisch hoch belasteten Brennraumöffnungen durch im Querschnitt U-förmig über den Öffnungsrand gebogene metallische Einfassungen geschützt.

Zylinderkopfdichtungen werden hergestellt, indem die Faservliese beidseitig auf die bevorzugt aus Rauhzacken bestehende Trägerplatte aufgewalzt und durch Verklammerung mit den Rauhzacken mechanisch befestigt werden und indem anschließend aus dem erhaltenen Laminat die Konturen der rohen Zylinderkopfdichtung ausgestanzt werden. Erst nach dem Einfassen der entsprechenden Durchgangsöffnungen wird die rohe Dichtung imprägniert und das Imprägniermittel wird anschließend vernetzt. Durch das Imprägnieren der fertiggestellten Dichtung erspart man sich wirtschaftlich vorteilhaft das mit hoher Stanzarbeit und Werkzeugverschleiß verbundene Ausstanzen aus bereits imprägniertem Material. Gleichzeitig erreicht man durch das Imprägnieren der bereits eingefaßten Dichtung entsprechend der DE-OS 23 04 592 weitgehende Imprägniermittelfreiheit im Faservliesmaterial unterhalb der metallischen Einfassungen, so daß das Material dort wesentlich stärker druckbelastbar als imprägniertes Faservliesmaterial ist. Die Dichtung kann so am Öffnungsrand hohen Dichtpressungen mit hoher Abdichtwirkung ausgesetzt werden.

Andererseits ist das Imprägnieren der fertig ausgestanzten und mit Einfassungen versehenen Dichtungen aufwendig und kann durch viele Faktoren beeinflußt, fehlerhaft imprägnierte Dichtungen ergeben. So besitzen die von Einfassungen nicht geschützten Schnittflächen des Dichtungsrandes und der Durchgangsöffnungen ein erhöhtes Saugvermögen für das Imprägniermittel, so daß an den Schnittflächen vermehrt Imprägniermittel in das Faservlies eintritt. Es entstehen Dichteunterschiede im Weichstoff mit erhöhtem Quellverhalten in den Randzonen. Imprägniermittel im Faservlies und sein anschließendes Vernetzen erzeugt Quellungen des Faservlieses, so daß die Dichtung anschließend aufwendig durch Nachverdichten und Nachplanieren der Einfassungen bearbeitet werden muß.

Diese Schwierigkeiten könnten vermieden werden, wenn das Dichtungsmaterial vor dem Ausstanzen der Dichtungen imprägniert wird. Festgestellt wurde aber, daß bei Verwendung der bisher bekannten Dichtungsmaterialien aus imprägnierten und metallisch verstärkten Faservliesen beim Stanzen und hinsichtlich der geforderten Imprägniermittelfreiheit unter der Einfassung die beschriebenen Nachteile wieder auftraten.

Der vorliegenden Erfindung liegt daher die Aufgabe zugrunde, eine Flachdichtung gemäß Oberbegriff des Hauptpatentanspruchs und ein Verfahren zur Herstellung der Flachdichtung zu schaffen, mit welchem einfach und kostensparend die imprägnierte Flachdichtung ohne die beschriebenen Nachteile hergestellt werden können.

Erfindungsgemäß wird diese Aufgabe durch eine Flachdichtung gelöst, deren Weichstoff aus

| | |
|---|---|
| 2 - 20 | Gewichtsprozent organische Synthesefasern |
| 10 - 70 | Gewichtsprozent eines ersten anorganischen Füllstoffs mit einer Korngröße von maximal 0,01 mm und einer spezifischen Oberfläche von maximal 30 m$^2$/g |
| 10 - 70 | Gewichtsprozent eines zweiten anorganischen Füllstoffs aus nadelförmigen oder globularen Teilchen mit einer Korngröße von maximal 0,01 mm und einer spezifischen Oberfläche von 50 - 350 m$^2$/g |
| 0,5 - 1 | Gewichtsprozent Zinkoxid |
| 3 - 10 | Gewichtsprozent Nitrilbutadien-Latex |

besteht.

Als organische Synthesefaser werden bevorzugt handelsübliche Polyaramidfasern, gegebenenfalls ein Gemisch mit Polyamidimidfasern, mit einer Faserlänge zwischen 0,5 und 8 mm eingesetzt, welche bevorzugt ganz oder teilweise in fibrillierter Form vorliegen. Als erster Füllstoff wird bevorzugt hochdisperse Kieselsäure oder calciniertes Kaolin mit entsprechender Korngröße und Oberfläche verwendet. Der zweite Füllstoff besteht bevorzugt aus einem Magnesium-Aluminiumsilikat vom Typ Attapulgit oder Sepiolit und als Latex wird bevorzugt ein handelsüblicher carboxylierter Nitrilbutadien-Latex verwendet.

Mit der erfindungsgemäßen Materialzusammensetzung wurden im Papierherstellungsverfahren Faservliese hergestellt und diese Imprägnierversuchen unterworfen. Die Faservliese zeigten ein Bild mit gleichmäßiger Verteilung der Bestandteile. Das Faservlies zeigt aufgrund der Verwendung der organischen Synthesefaser als einzige Faserart in relativ geringer Menge ein gleichmäßiges Fasergerüst ohne ungleichmäßig verteilte Hohlräume oder Anhäufungen durch Verfilzung der Fasern. Die zwischen den Fasern liegenden Hohlräume sind gleichmäßig mit den Füllstoffteilchen ausgefüllt, wobei die dichte Packung der Füllstoffteilchen, bedingt durch ihren kleinen mittleren Durchmesser, nur eine enge Porenverteilung mit kleinem Porenradius zuläßt. Die Festigkeitswerte des Faservlieses erlaubt eine problemlose Handhabung zur Herstellung der Dichtung während der weiteren Verfahrensschritte. Die Verwendung von Füllstoffen mit hoher spezifischer Oberfläche bewirkt eine hohe Druckbelastbarkeit, die über den Werten herkömmlicher Faservliese für Dichtungen liegt.

Das Imprägnieren des Faservlieses erfolgt mit den üblichen vernetzbaren flüssigen Polymeren, bevorzugt wurden dabei handelsübliche flüssige Polysiloxane verwendet. Gefunden wurde dabei, daß es aufgrund der feinen Poren im Faservlies genügte, mit einem Füllfaktor von maximal 0,5 zu imprägnieren, um eine ausreichende Querschnittsdichtigkeit des Materials zu erhalten. Beim Imprägnieren blieb dabei offensichtlich auch durch die geringe Menge an verwendetem Imprägniermittel eine gute Druckfestigkeit erhalten, so daß das imprägnierte Faservlies genauso wie das nicht imprägnierte Faservlies einer hohen Dichtpressung ausgesetzt werden konnte. Gute Abdichtwirkungen waren dadurch auch mit imprägniertem Material erzielbar. Als zweckmäßig erwies sich, daß dem Faservliesmaterial, dann wenn über Katalysatoren vernetzende Imprägniermittel verwendet werden, diese direkt fein verteilt zugegeben werden. So wird eine optimale gleichmäßige Vernetzung des Imprägniermittels erreicht. Bei den bevorzugt eingesetzten Imprägniermitteln aus Polysiloxanen enthält das Faservlies fein verteilt bevorzugt zwischen 2 und 4 Gewichtsprozent Zinkstearat.

Stanzversuche wurden an laminierten Dichtungsplatten aus auf im Rauhzackenblech beidseitig aufgepreßten und imprägnierten Faservliesen mit der erfindungsgemäßen Zusammensetzung durchgeführt. Dabei ergab sich eine Stanzarbeit, die etwa der einer Dichtungsplatte mit nicht imprägnierten Faservliesen entsprach. Aus dem erfindungsgemäßen Dichtungsmaterial konnte also auch nach dem Imprägnieren problemlos und ohne größeren Werkzeugverschleiß die Dichtung herausgestanzt werden. Gegebenenfalls kann das Faservlies zusätzlich ein Feststoffgleitmittel aus bevorzugt bis zu 10 Gewichtsprozent Graphitmaterial enthalten, um die Stanzarbeit noch weiter zu erleichtern. Eine Verschlechterung des Funktionsverhaltens des Faservlieses, insbesondere im Hinblick auf seine Druckfestigkeit, wurde durch die Zugabe der Gleitmittel nicht beobachtet.

Unter Verwendung des erfindungsgemäßen Faservliesmaterials können jetzt Flachdichtungen aus imprägniertem Dichtungsmaterial problemlos ausgestanzt und zu funktionstüchtigen Dichtungen weiterverarbeitet werden. Besonders vorteilhaft ist dabei, daß jetzt die Herstellung der Dichtung weitgehend vollautomatisch in einem kontinuierlich ablaufenden Arbeitsprozeß erfolgen kann. Dazu wird vom Rollenmaterial aus Faservliesen und vom Rollenmaterial aus dem Trägerblech, bevorzugt einem Rauhzackenblech, ausgegangen, das nach dem beidseitigen Aufwalzen des Faservliesmaterials kontinuierlich als Band durch ein Imprägniermittelbad und danach durch einen Vernetzungsofen geführt werden kann. Aus dem erhaltenen, fertig imprägnierten Dichtungslaminat können die Dichtungen direkt ausgestanzt und zu einsatzfähigen Dichtungen weiterverareitet werden. Genauso kann im kontinuierlich ablaufenden Verfahren das Faservliesmaterial zunächst imprägniert und das Imprägniermittel im Ofen vernetzt werden und danach mit dem Trägerblech vereinigt werden.

Im Sinne der Erfindung können ebenso vorteilhaft die Dichtungen aus dem mit der Trägerplatte vereinigten Faservliesmaterial ausgestanzt und nach dem anschließenden Imprägnieren durch Versehen der entsprechenden Durchgangsöffnungen mit metallischen Einfassungen hergestellt werden. Die nicht eingefaßten Flachdichtungen sind gleichmäßig dick und können mit gleichmäßiger Imprägniermittelaufnahme durchtränkt werden, Benetzungsfehler der freiliegenden Einfassungsflächen durch das Imprägniermittel werden ausgeschlossen und das Einplanieren der Einfassung mit definiertem Bördelüberstand in den durch den Imprägniervorgang aufgequollenen Weichstoff ist mit geringem Kraftaufwand möglich.

Das mit dem erfindungsgemäßen Flachdichtungsmaterial anwendbare kontinuierlich ablaufende Imprägnierverfahren ermöglicht wirtschaftlich vorteilhaft die einfache Herstellung von Flachdichtungen durch hohe Produktivität. Die erhaltenen Flachdichtungen besitzen eine gleichmäßige Imprägnation mit gleichmäßiger Imprägniermittelaufnahme bei einem gleichzeitig guten Funktionsverhalten, das eine hohe Dichtpressungsdruckbelastbarkeit entsprechend einem optimalen Abdichtverhalten zuläßt. Aus den fertig gestanzten Flachdichtungen können die Dichtungen durch übliche Nachbearbeitungsverfahrenm, wie Einfassen der entsprechenden Durchgangsöffnungen und Auftragen von Auflagen oder Beschichtungen, fertiggestellt werden.

Vorteilhaft ist die geringe Klebneigung der Dichtungen, so daß meistens auf die üblicherweise aufgetragenen Antiklebbeschichtungen verzichtet werden kann.

Bevorzugt werden mit dem erfindungsgemäßen Dichtungsmaterial durch das erfindungsgemäße Verfahren Zylinderkopfdichtungen für Verbrennungskraftmaschinen hergestellt. Im Prinzip können aber auch ähnlich belastete Flachdichtungen, insbesondere für den Motorenbau, wie Auspuffflanschdichtungen, hergestellt werden.

**Patentansprüche**

1. Imprägnierte Flachdichtung, wie insbesondere imprägnierte Zylinderkopfdichtungen für Verbrennungskraftmaschinen, bestehend aus einem gegebenenfalls metallisch verstärkten Faservlies, dadurch gekennzeichnet, daß das Faservlies aus

    2 - 20      Gewichtsprozent organische Synthesefasern

    10 - 70     Gewichtsprozent eines ersten anorganischen Füllstoffs mit einer Korngröße von maximal 0,01 mm und einer spezifischen Oberfläche von maximal 30 m²/g

    10 - 70     Gewichtsprozent eines zweiten anorganischen Füllstoffs aus nadelförmigen oder globularen Teilchen mit einer Korngröße von maximal 0,01 mm und einer spezifischen Oberfläche von 50 - 350 m²/g

    0,5 - 1      Gewichtsprozent Zinkoxid

    3 - 10      Gewichtsprozent Nitrilbutadien-Latex

besteht.

2. Flachdichtung nach Anspruch 1, dadurch gekennzeichnet, daß die organische Synthsefaser aus Polyaramid und/oder einem Polyamidimid mit einer Faserlänge zwischen 0,5 - 8 mm besteht, und daß die Synthesefasern ganz oder teilweise fibrilliert sind.

3. Flachdichtung nach den Ansprüchen 1 oder 2, dadurch gekennzeichnet, daß der erste Füllstoff aus hochdisperser Kieselsäure oder calciniertem Kaolin besteht.

4. Flachdichtung nach mindestens einem der Ansprüche 1 bis 3, dadurch gekennzeichnet. daß der zweite Füllstoff aus einem Magnesium-Aluminiumsilikat vom Typ Attapulgit oder Sepiolit besteht.

5. Flachdichtung nach den Ansprüchen 1 bis 4, dadurch gekennzeichnet, daß das Latex aus einem carboxylierten Nitrilbutadien-Latex besteht.

6. Flachdichtung nach den Ansprüchen 1 bis 5, dadurch gekennzeichnet, daß das Faservlies bis zu 10 Gewichtsprozent Graphitpulver enthält.

7. Flachdichtung nach den Ansprüchen 1 bis 6, dadurch gekennzeichnet, daß das Faservlies 2 bis 4 Gewichtsprozent, abgestimmt auf das verwendete Imprägniermittel, eines festen Vernetzungskatalysators enthält.

8. Verfahren zur Herstellung von Flachdichtungen aus dem Material der Patentansprüche 1 bis 7 durch einen kontinuierlich arbeitenden Imprägnierprozeß, bei dem mit dem Trägerblech verbundenes Faservliesmaterial oder einfaches Faservliesmaterial in Bandform kontinuierlich durch ein Imprägniermittelbad und anschließend durch einen Vernetzungsofen zur Vernetzung des Imprägniermittels geführt wird und daß dann aus dem imprägnierten, bandförmigen Dichtungsmaterial die Flachdichtung ausgestanzt und in den weiteren Verfahrensschritten fertiggestellt wird.

9. Verfahren zur Herstellung von Flachdichtungen aus dem Material der Patentansprüche 1 - 7 durch Ausstanzen der Dichtungskonturen aus dem metallisch verstärkten Faservlies, Imprägnieren der erhaltenen rohen Dichtung und Vernetzen des Imprägniermittels sowie Einfassen der entsprechenden Durchgangsöffnungen mit U-förmig über den Öffnungsrand gebogenen metallischen Einfassungen.

Europäisches Patentamt

**EUROPÄISCHER RECHERCHENBERICHT**

Nummer der Anmeldung

EP    91 12 0679

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 166 376 (GOETZE AG)<br>* Zusammenfassung; Ansprüche 1,2,3,4 *<br>* Seite 4, Zeile 11 - Zeile 23 *<br>* Seite 5, Zeile 12 - Zeile 29 *<br>--- | 1-8 | C09K3/10<br>F16J15/12 |
| X | EP-A-0 104 317 (GOETZE AG)<br>* Seite 1, Zeile 1 - Zeile 16; Ansprüche 1,3,4,7-11; Beispiel 2 *<br>* Seite 7, Zeile 22 - Zeile 30 *<br>--- | 1-8 | |
| A | EP-A-0 096 389 (FRENZELIT WERKE)<br>* Zusammenfassung; Ansprüche 1,2,4,8; Tabelle 2 *<br>--- | 1-8 | |
| A | EP-A-0 151 302 (GOETZE AG)<br>* Zusammenfassung; Ansprüche 1,2 *<br>* Seite 5, Zeile 24 - Seite 6, Zeile 17 *<br>----- | 1-8 | |

**RECHERCHIERTE SACHGEBIETE (Int. Cl.5)**

C09K
F16J

Der vorliegende Recherchenbericht wurde für alle Patentansprüche erstellt

| Recherchenort | Abschlußdatum der Recherche | Prüfer |
|---|---|---|
| DEN HAAG | 29 JULI 1992 | NICOLAS H.J.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument